# EUROPEAN PATENT SPECIFICATION

(11) **EP 1 129 814 B1**
(45) Date of publication and mention of the grant of the patent: **28.04.2004**
(21) Application number: 01830126.7
(22) Date of filing: 22.02.2001
(51) Int. Cl.: B23Q 1/26, F16C 25/06, F16C 29/04, B23D 45/02, B23D 47/04

(54) **A circular sawing machine for sawing panels with continuous longitudinal adjustment of the play between a carriage and the guide rail**
Kreissägemaschine zum Sägen von Platten mit stufenloser Verstellung des Spieles zwischen einem Schlitten und seiner Führungsschiene
Machine à scie circulaire à scier des panneaux avec réglage continu du jeu entre un chariot et son rail de guidage

(30) Priority: 24.02.2000 IT RN20000001 U
(43) Date of publication of application: 05.09.2001
(73) Proprietor: SCM GROUP S.p.A., 47900 Rimini (IT)
(72) Inventor: Pucci, Aureliano, 47900 Rimini (IT)
(74) Representative: Lanzoni, Luciano

(56) References cited:
- EP-A- 0 653 574
- EP-A- 0 687 520
- DE-A- 1 552 626

## Description

The present invention relates to a circular sawing machine of the type known in the woodworking machinery sector e.g. EP 0 687 520. More specifically, in the sector for industrial machining of small batches of panels made of wood or a similar material. In particular the present invention relates to a machine of this category which is equipped with a new system for adjustment of the play in the sliding connection between the mobile carriage, which supports the workpiece, and the relative rail which is integral with the base, where said system basically consists of rigid elements which, when inserted and tightened in suitable seats, create an elastic reaction able to control the sliding play values. The usual elements of the above-mentioned circular sawing machines for normal machining include a fixed base, a table on which to rest the workpiece, divided into a part which slides longitudinally (called the carriage, normally made of extruded aluminium alloy) and a fixed part (called the fixed table, normally made of cast iron) integral with the base, a toothed disk cutting tool, normally positioned vertically, between the carriage and the fixed table, a side reference stop on which the workpiece rests - positioned according to the direction of cutting, that is to say, longitudinally - which moves transversally on special guides to adapt to the different widths of the strips cut, and other accessories useful for square cutting, such as a transversal squaring stop integral with the carriage, and supports.

In the circular sawing machine sector, machines are known in which the sliding connection between the carriage and the rail is obtained by inserting rolling elements between them in the longitudinal direction, said elements more often being bearings (as on the machines designed by the Applicant disclosed in EP 0 687 520), or less frequently, wheels connected on small axles.

When bearings are used as rolling elements for movement of the carriage, they are normally aligned between two parallel longitudinal guides made in the space between the rail and the carriage, said guides being formed by races made in the carriage and the rail opposite, where there is also a linear cage for the bearings to synchronise the movement of the bearings in the two guides, since there is also interference in the insertion of the bearings between the carriage and the rail.

Said operating interference, which loads the bearings between the carriage and the rail, can be obtained either by eliciting an elastic reaction on the bearings by slightly forcing the structures of the carriage or the rail during assembly (in this case the forcing can be achieved with suitable accurate grinding dimensions on the sections of the carriage and rail, in this particular case on the race machining), or by fitting longitudinally adjustable elements at the side of the races. These elements can deform the cross section of the race, making the carriage or rail sections wider or narrower and, as a result, altering the distances between the races, creating the above-mentioned forcing on the bearings.

It is known from document EP 0 653 574 a sliding block with adjustable track positioning comprising a prismatic body, in one face of which there is a longitudinal recess arranged to receive a rail by way of rolling elements positionable in respective tracks, the body being essentially of C-shaped cross-section consisting of a central part from which two flanges extend, wherein in at least one of the two flanges of the C-shaped cross-section there is provided a second longitudinal recess which divides it into separate portions connected together at the central part, the second recess containing elements for adjusting the distance between the two separate portions.

A fundamental observation relating to the forcing achieved by the longitudinal displacement of adjustable elements in the carriage or rail structure concerns the fact that, in the machines made until now, said elements (normally gibs or threaded rods) were always distributed in a noticeably discontinuous manner along the length of the carriage or rail, leaving large longitudinal stretches without an adjusting element inserted, resulting in the disadvantages described below.

The known solution indicated above, in which the carriage is moved using bearings which are preloaded either by precision grinding of the carriage and rail races or, alternatively, by means of adjusting elements distributed in a discontinuous longitudinal fashion along the carriage or rail as described above, has significant problems, that is to say, with both preloading methods.

To preload the bearings by grinding the carriage and rail races (which excludes the need for adjusting elements), it is important to consider the high production costs - for work on both the carriage and the rail - linked to grinding which must be carried out on a high performance, long grinder, therefore, on a machine which is expensive in terms of both the initial investment and running costs. In addition, there are the costs linked to the operator time required for handling large workpieces, the inevitable waste on intrinsically expensive workpieces, imposed by the limited tolerance values in this case, due to the length of the machining, which is a disadvantage.

Similarly, to preload the bearings by fitting adjusting elements in a discontinuous longitudinal fashion (excluding the need for race grinding), it must be noticed that in this case the system is not very sensitive to the adjustment, due to the discontinuous distribution of the adjusting elements along the races. In these cases, the axis line of the races has a more accentuated curvature at the points where the adjusting elements are fitted, therefore, a linearity defect on the same axis line, which takes on a characteristic snaking configuration. It is also important to notice that more thorough analysis of the deformed geometry of the races revealed the frequent presence of a local torsion component on the ribbon-shaped race at the adjusting elements, presenting a further obstacle to regular carriage motion, which unfortunately remains even following careful adjustment intended to eliminate linearity defects in the axis line.

Thus, the construction method with adjusting elements placed in a discontinuous manner along the length of the races, generally results in a carriage movement characterised by frequent points at which there is noticeable opposition to the movement, that is to say, even following careful adjustment by a skilled operator. As regards this operation, it is important to emphasise that it is very complex, requiring many hours of work, as well as the use of special templates and considerable operator expertise for the interpolation adjustment in the sections outside the adjusting point.

It may, therefore, be concluded that each of the methods used until now for preloading the bearings has significant disadvantages, both from the construction viewpoint and the functional viewpoint.

The aim of the machine which forms the subject matter of the present invention is to overcome the above-mentioned disadvantages. The present invention, as described in the claims herein, overcomes the problem of configuring a machine where the movement of the carriage relative to the rail, that is to say, relative to the base, takes place in a way which is economic in terms of construction and highly satisfactory in terms of system operation and easy adjustments (where necessary).

The idea described below fulfils the above-mentioned aims with a carriage - rail connecting configuration in which the rolling elements are preloaded by means of an adjusting system which is not discretized relative to the longitudinal direction.

Specifically, the present invention relates to a circular sawing machine for workpieces made or wood or a similar material, of the substantially known type and normally comprising a first horizontal table on which the workpiece rests, attached to a carriage which moves in the longitudinal direction of cutting feed, and a rail element, integral with the machine base, which guides the carriage longitudinally on rolling elements inserted between them. Straight, parallel races are also present in the carriage and in the rail, in which the rolling elements roll. The rail and carriage races are opposite one another in pairs and constitute at least two separate guides in the form of longitudinal channels for the rolling elements.

Other basic elements include a structure, for example the rail (or, in a mutually exclusive alternative, the carriage), in which there is a continuous longitudinal groove, which is parallel with and adjacent to a race in the structure and, with reference to the adjacent race, located on the opposite side of that intended for rolling, having a surface on which a thrust directly produces a movement of the adjacent race, transversally to the longitudinal direction X, by elastic deformation of a more yielding part of the section of the structure. The machine also includes elements for adjusting the transversal race movement, which can be inserted in the groove and tightened to adjust them using tightening means. When the appropriate means are tightened, the adjusting elements can exert a thrust by contact with the surface of the groove and cause the consequent race elastic adjusting movement. There is also a second, fixed table, coplanar with the carriage table, and at least one disk-shaped rotary cutting tool positioned between the opposite longitudinal edges of the carriage table and the fixed table, and designed to cut the workpieces.

The distinctive feature of the present invention lies in the fact that the above-mentioned race transversal movement adjusting elements consist of sections of a bar substantially circular or elliptical in a cross-section with a plane normal to the longitudinal direction and placed consecutively and without longitudinal interruptions inside the groove in the rail, where the thrust on the surface of the groove is produced by contact with the lateral surface of of the sections of the bar, by tightening the adjusting means according to the depth of approach of the sections of bar (13) according to a transversal direction.

Other distinctive features of the present invention lie in details of the basic idea proposed, such as the embodiment in which the various consecutive sections of bar become a single section, forming a single continuous bar inserted in the groove; or the embodiment in which the cross-section of the groove has a substantially open diverging "V" shape and the thrust surface, which can influence transversal adjustment of the race next to the groove has a cross-section which is one of the branches of the "V". In another embodiment, the sections of bar have cross-sections specifically designed for forcing the "V" shaped groove by bringing the sections of bar together transversally in the groove, according to the axis of the "V", and in particular if they have a circular or elliptical cross-section. In yet another embodiment, the elements for tightening the sections of bar to the structure of the rail are either lag screws or screw and nut mechanisms or lead screw and lead nut mechanisms, with the screws preferably placed in transversal holes made in the sections of bar, according to the axis of the "V" shape, as illustrated in the accompanying drawings. It should be noticed that the configuration of the present invention is identical when the structure in which the parallel longitudinal groove is made, parallel with a race, is either of the two elements, that is to say, the rail and the carriage, which are mutually exclusive.

The functional result of such a configuration is very regular sliding of the carriage on the rail, that is to say, without jamming, thanks to the continuous adjustment immediately made at the side of the race for preloading adjustment.

The advantages of the present invention, therefore, basically consist in the fact that the rolling elements are preloaded in a very simple way, which requires less of the operator's time and is irrespective of operator skill, using elements readily available on the market. Moreover, this result is in line with modern machine set-up requirements, in terms of constant product quality, where the skill of the operator setting up the machine is not considered.

This must be added to the details already indicated relating to the fact that construction of the present invention no longer requires longitudinal grinding on the carriage and the rail, which is expensive both in terms of the large machinery used and a skilled operator for the grinding machines.

The present invention is described more clearly below, with reference to the accompanying drawings which illustrate preferred embodiments of it without limiting its scope of application and in which:

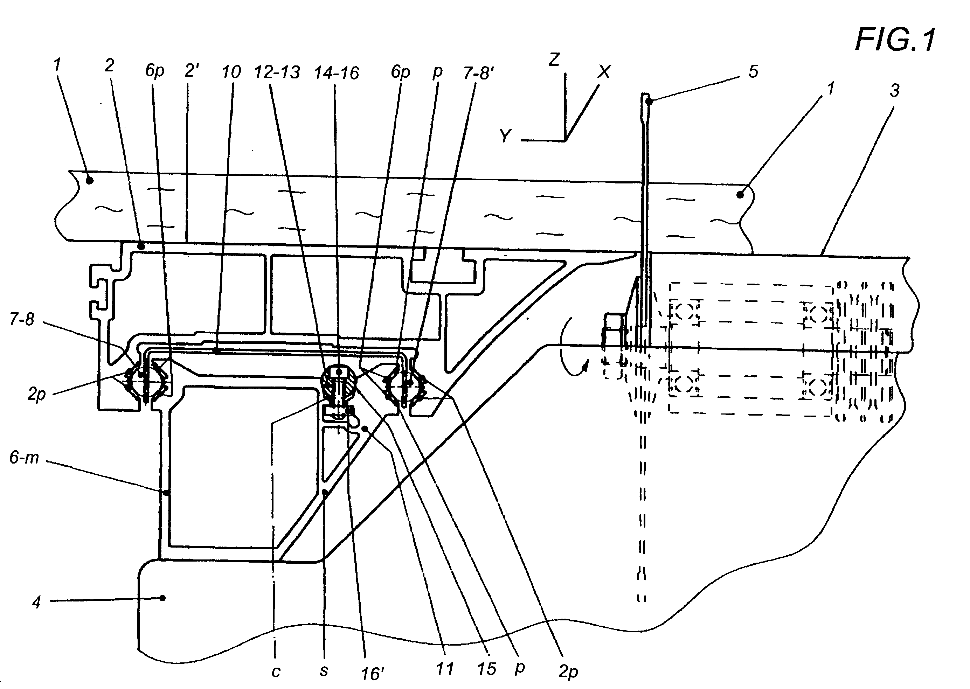

- Figure 1 is a view according to the longitudinal direction X of cutting feed, relative to the whole of the part of the machine relating to the invention, where the structure in which the groove is made is the rail;

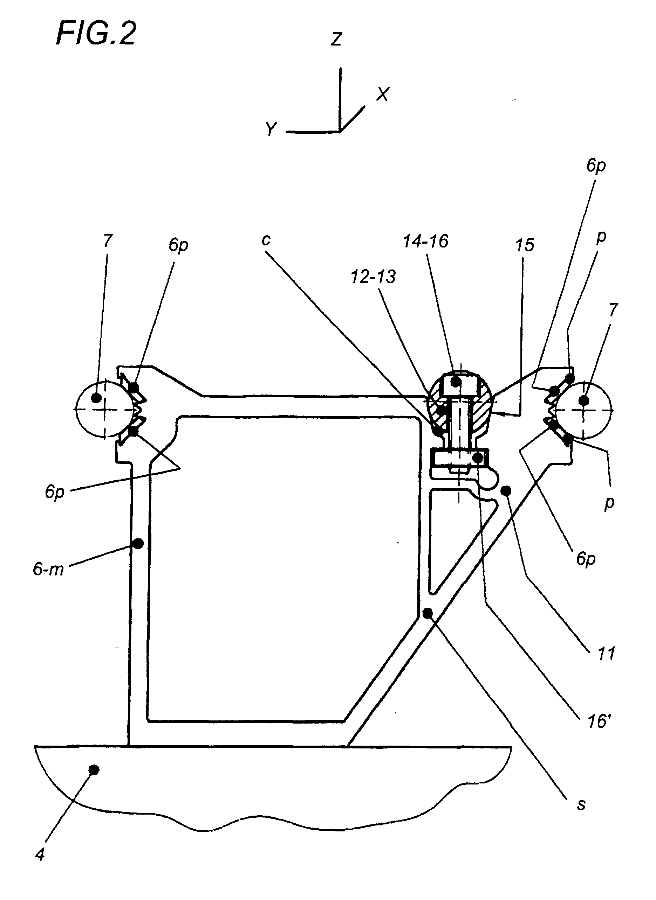

- Figure 2 is a view, again according to longitudinal direction X, of the rail structure only, again in the more common case in which the longitudinal groove is made in the rail;
- Figure 3 is a view and a revolved section of the adjusting elements made in accordance with the claims of the present invention, that is to say, made using sections of bar which are inserted in the groove in the rail, which in this case have holes for insertion of the screws which tighten the sections of bar in place;

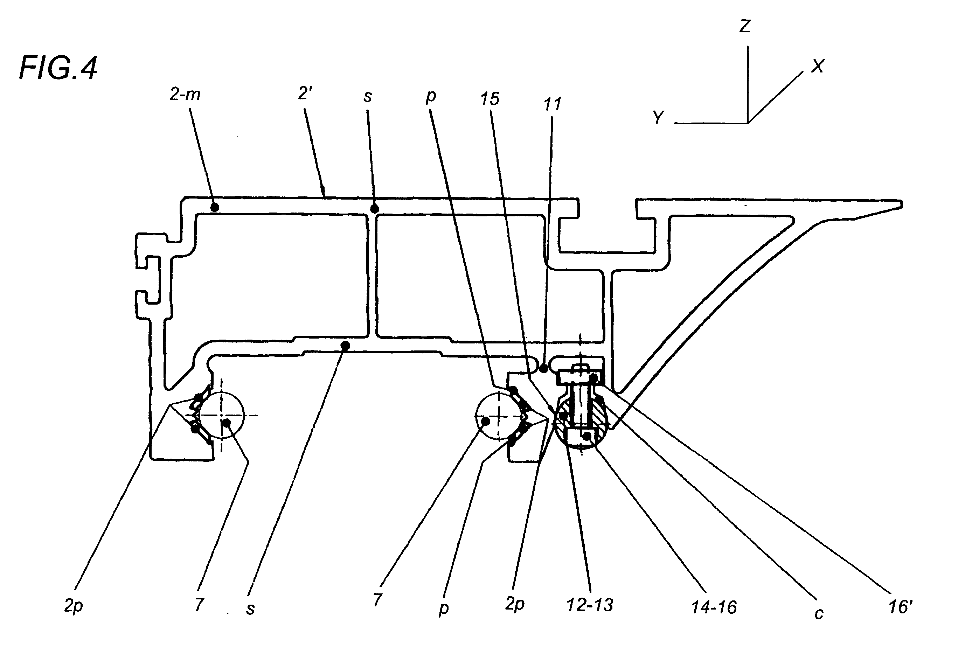

- Figure 4 is a view, again according to longitudinal direction X, of the carriage only, in the less common situation in which the longitudinal groove is made in the carriage; obviously the cross-section of this carriage is different to that of the carriage illustrated in Figure 1, where the groove was made in the rail.

This machine, whose architecture and basic functions are known, basically comprises a machine base 4 which rests on the ground in a stationary fashion, a flat table 2' mounted on a carriage 2 which slides in a longitudinal direction X of cutting feed, lying in the horizontal XY plane and designed to support and transport a workpiece 1 which is normally plate-shaped, a table 3 coplanar with the table 2' and fixed to the base 4 for supporting the workpiece 1, a disk-shaped cutter tool 5 lying in the vertical XZ plane between the opposite edges of the carriage 2 and the fixed table 3, a rail 6 designed to support and guide the carriage 2 as it moves, bearings 7 inserted between the carriage and the rail and running in parallel longitudinal channels 8 and 8' made to hold them, each delimited by two races 6p in the rail and two races 2p in the carriage, parallel with and opposite those in the rail. The bearings substantially roll in these races. In this particular case, the races have the shape of greatly extended flat longitudinal surfaces, like a longitudinal tape. The two rows of bearings aligned in the channels 8 and 8' are united by a cage 10 which synchronises the longitudinal movement of the two rows.

Only one of the two structures, forming the rail 6 and the carriage 2, is the structure labelled m (which in the present embodiment is the rail 6) in which a continuous longitudinal groove c is made, parallel with and adjacent to a race p chosen from amongst the races in the structure m, that is to say, from the races 6p in the rail. Relative to the race p, said groove c is on the opposite side to that in which the bearings 7 roll, and according to a section normal to the longitudinal direction X, is substantially a diverging "V" shape. The axis of symmetry of the "V" lies in the vertical direction Z, with the wider part towards the top of the machine and open at the top, where in cross-section one of the sides of the "V" shape (of the two, that closest to the race p) is a longitudinal surface 15 of the groove c, which acts as the thrust surface for adjusting transversal projection of the race p. In other words, the adjacency of the race p with the groove c, in particular the adjacency of the surface 15 of the groove c with the race p, means that a thrust exerted on the surface 15 causes a consequent transversal movement of the race p, at least at the point where the thrust was applied, because the race p is supported by a part 11 of the section s of the structure m which yields the most because it forms an overhang.

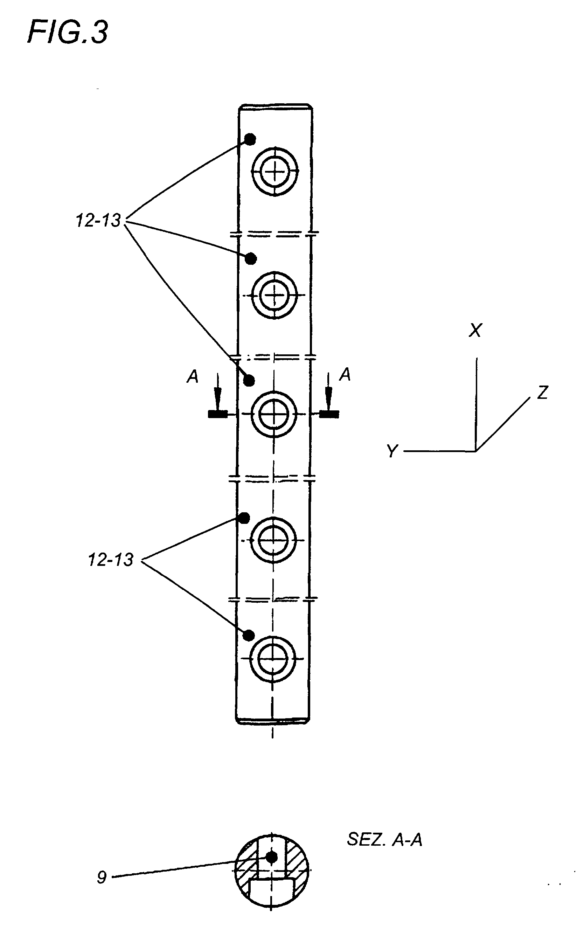

The elements designed to be inserted in the groove c are the adjusting elements 12 which provide the thrust on the surface 15. In the particular case illustrated here, these elements 12 are sections of bar 13, illustrated in Figure 3, with holes 9 which are transversal to the longitudinal direction X in which the bar sections lie.

Tightening means 14, which in this particular case are screws 16 engaging in lead nut mechanisms 16', are used for progressively tightening the sections of bar 13 in the groove c, with the consequent progressive thrust, which is a function of the tightening, exerted on the wall 15 adjacent to the race p.

In functional terms, it should be noticed that in such a configuration the sections of bar 13 are inserted longitudinally in the "V" shaped groove c. They can be tightened in the groove in an adjustable manner using the screws 16 which engage with the respective lead nuts 16' which are in turn constrained, when the screws are tightened, by geometric projections or spurs in the section s of the structure m which in this case, as already indicated, is the rail 6. The sections of bar 13 are arranged with the axis of their transversal holes 9 along the axis of the "V" shape. The screws 16 engage in the transversal holes 9 in the bars and in the lead nuts 16'. A basic feature of the configuration according to the present invention is that the sections 13 are arranged along the groove c without longitudinal interruptions. That is to say, the sections are contiguous, meaning that they may be substituted with a single section of bar whose length is substantially equivalent to the sum of the various individual sections. This arrangement fulfils the main aim of the present invention, according to which the transversal movement induced by the thrust of the contiguous sections of bar 13 is equivalent to a transversal thrust which is distributed longitudinally with continuity, rather than a moderate sum of precision thrusts. As a result, the transversal movement of the race p (caused by tightening the screws 16 in a adjustable manner and, therefore, adjustably bringing together the sections of bar 13 according to the axis of the groove c "V" shape) there is no set of local deformations, that is to say, localised projections of the race p separated by long recesses. Instead, it is much more even, and not curving, thus bringing the great advantage which is regular motion of the carriage and easy adjustment of preloading on the race p.

The machine configured in this way, therefore, fulfils the preset aims thanks to a simple rail or carriage structure design, without the need for excessive alterations to the existing machine structure.

The invention described can be subject to numerous modifications and variations without thereby departing from the scope of the inventive concept. Moreover, all the details of the invention may be substituted by technically equivalent elements.

## Claims

1. A circular sawing machine for workpieces (1) made of wood or similar materials, of the substantially known type, comprising:
- a first table (2') for supporting the workpiece (1), lying in the horizontal plane XY relative to a triple of directions XYZ at right angles to one another, and being in the form of a carriage (2) mobile in a longitudinal direction X of cutting feed;
- a rail element (6), being integral with the base (4) of the machine and, with rolling elements (7) inserted between it and the carriage, designed to guide the carriage (2) in the direction X;
- respective races (6p) in the rail and (2p) in the carriage, having straight and parallel axes, designed to allow the rolling elements (7) to roll in them, at least two of the races (6p) in the rail being opposite at least two of the races (2p) in the carriage, forming at least two separate guides (8) and (8'), in the form of straight and parallel longitudinal channels, for the rolling elements (7), the latter being aligned within the channels;
- a second, fixed table (3), located at the side of and coplanar with the first table (2') and for supporting the workpiece (1) ;
- a disk-shaped rotary cutting tool (5) mounted on said fixed table (3) and rotating in a vertical plane XZ immediately between the opposite longitudinal edges of the first table (2') and the carriage (2) and the second, fixed table (3), and designed to cut the workpiece (1), the machine being **characterised in that** the machine comprises
- a structure (m), being either the rail (6) or the carriage (2), the two being mutually exclusive, in which there is a continuous longitudinal groove (c), being parallel with and adjacent to a race (p) in the structure (m), the race being from amongst the races (6p) in the rail (6) or the races (2p) in the carriage (2), depending whether or not the structure (m) in which the groove (c) is made is the rail (6) or the carriage (2); the groove (c) being on the opposite side to that for rolling, with reference to the adjacent race (p) and groove (c), having at least one surface (15) on which a thrust is the direct cause of a movement of the adjacent race (p), across the direction X, due to elastic deformation of a more yielding part (11) of the section (s) of the structure (m) which supports the race (p);
- elements (12), designed for adjusting the transversal movement of the race (p), which may be inserted in the groove (c) and adjustably tightened to the structure (m) using tightening means (14), said elements (12), when the means (14) are tightened, exerting the above-mentioned thrust by contact with the surface (15) and causing and maintaining the consequent transversal elastic movement which adjusts the race (p);
the adjusting elements (12) for the transversal movement of the race (p) consisting of sections of a bar (13), where said sections of the bar (13) are substantially circular or elliptical in a cross-section with a plane normal to the longitudinal direction and are arranged consecutively and without longitudinal interruptions in the groove (c), and where a progressive forcing, and consequent thrust on the surface (15) of the groove (c) is induced on it by contact with the lateral surface of the sections of bar (13), by tightening the means (14), according to the depth of approach of the sections of bar (13) according to a transversal direction.

2. The machine according to claim 1, **characterised in that** the sections of bar (13) consist of a single section of bar, forming a continuous bar inserted longitudinally in the groove (c).

3. The machine according to claim 1 or 2, **characterised in that**, in a cross-section with a plane normal to the longitudinal direction, the groove (c) has a substantially diverging "V" shape with the transversal direction which is substantially identified by the centre line through the "V" shape, the thrust surface (15) being, in the cross-section, one of the branches of the "V" shape.

4. The machine according to any of the claims from 1 to 3, **characterised in that** the tightening means (14) consist of lag screws (16) in the structure (m), being able to tighten the sections of bar (13) to the structure (m).

5. The machine according to any of the claims from 1 to 3, **characterised in that** the tightening means (14) consist of screws (16) and lead nut (16') mechanisms, being able to tighten the sections of bar (13) to the structure (m).

6. The machine according to any of the claims from 1 to 5, **characterised in that** the sections of bar (13) have holes (9) which are transversal to the longitudinal direction of assembly, being designed to engage the screws (16), in turn assembled substantially according to the centre line through the "V" shape, for tightening the sections of bar (13) to the structure (m).

## Patentansprüche

1. Kreissägemaschine für Werkstücke (1) aus Holz oder ähnliche Materialien von im wesentlichen bekannten Typ, enthaltend:
- einen ersten Tisch (2') zum Tragen des Werkstückes (1), das im Verhältnis zu einer Dreiergruppe von Richtungen XYZ im rechten Winkel zueinander auf einer horizontalen Ebene XY liegt, und der in Form eines Schlittens (2) ausgelegt ist, beweglich in einer Längsrichtung X der Schneidzuführung;
- ein Schienenelement (6), das fest mit dem Sockel (4) der Maschine verbunden und mit Wälzelementen (7) versehen ist, eingesetzt zwischen diesem und dem Schlitten (2) und dazu bestimmt, den Schlitten (2) in der Richtung X zu führen;
- jeweilige Laufspuren (6p) in der Schiene und (2p) in dem Schlitten, die gerade und parallele Achsen haben und dazu dienen, das Abrollen der Wälzelemente (7) in ihnen zu erlauben, wobei wenigsten zwei der Laufspuren (6p) in der Schiene wenigstens zwei der Laufspuren (2p) in dem Schlitten gegenüberliegen und wenigstens zwei getrennte Führungen (8) und (8') in Form von geraden und parallelen Längskanälen für die Wälzelemente (7) bilden, wobei letztere in den Kanälen zueinander ausgerichtet sind;
- einen zweiten, feststehenden Tisch (3) zum Tragen des Werkstückes (1), angeordnet an der Seite des ersten Tisches (2') und koplanar zu diesem;
- ein scheibenförmiges, rotierendes Schneidwerkzeug (5), montiert an dem genannten feststehenden Tisch (3) und sich in einer vertikalen Ebene XZ drehend, und zwar unmittelbar zwischen den sich gegenüberliegenden Längskanten des ersten Tisches (2') und des Schlittens (2) und des zweiten feststehenden Tisches (3), und dazu bestimmt, das Werkstück (1) zu schneiden, **dadurch gekennzeichnet, dass** die Maschine wie folgt enthält:
- eine Struktur (m), die entweder die Schiene (6) oder der Schlitten (2) ist, wobei beide gegenseitig ausschliesslich sind, in welcher sich eine kontinuierliche, längsverlaufende Rille (c) befindet, parallel zu und angrenzend an eine Laufspur (p) in der Struktur (m), wobei die Laufspur eine der Laufspuren (6p) in der Schiene (6) oder der Laufspuren (2p) in dem Schlitten (2) ist, abhängig davon, ob die Struktur (m), in welche die Rille (c) eingearbeitet ist, durch die Schiene (6) oder den Schlitten (2) gebildet wird; wobei sich die Rille (c) auf der entgegengesetzten Seite von der zum Abrollen befindet, unter Bezugnahme auf die angrenzende Laufspur (p) und die Rille (c), und wenigstens eine Oberfläche (15) aufweist, auf welche ein Druck direkt eine Verschiebung der angrenzenden Laufspur (p) quer zu der Richtung x bewirkt, und zwar aufgrund der elastischen Verformung eines mehr nachgebenden Teils (11) des Abschnittes (s) der Struktur (m), welche die Laufspur (p) trägt;
- Elemente (12), die dazu bestimmt sind, die Querverschiebung der Laufspur (p) zu regulieren, und die in die genannte Rille (c) einsetzbar und regulierbar sind und unter Verwendung von Spannmitteln (14) an der Struktur (m) befestigt werden, wobei die genannten Elemente (12), wenn die genannten Mittel (14) gespannt sind, den oben erwähnten Druck durch den Kontakt mit der Oberfläche (15) ausüben und die daraus sich ergebende elastische Querverschiebung zur Regulierung der genannten Laufspur (p) bewirken und beibehalten; wobei die Reguliermittel (12) für die Querverschiebung der Laufspur (p) aus Abschnitten einer Stange (13) bestehen, wo die genannten Abschnitte der Stange (13) im Querschnitt im wesentlichen kreisförmig oder elliptisch sind, mit einer Ebene normal zu der Längsrichtung, und aufeinanderfolgend und ohne längsverlaufende Unterbrechungen in der Rille (c) angeordnet sind, und wo eine progressive Kraft und folglich der Druck auf die Oberfläche (15) der Rille (c) auf diese durch den Kontakt mit der seitlichen Oberfläche der Abschnitte der Stange (13) ausgeübt wird, und zwar durch das Spannen der Mittel (14), je nach der Näherungstiefe der Abschnitte der Stange (13) in einer querverlaufenden Richtung.

2. Maschine nach Patentanspruch 1, **dadurch gekennzeichnet, dass** die Abschnitte der Stange (13) aus einem einzigen Stangenabschnitt bestehen, der eine kontinuierliche, in Längsrichtung in die Rille (c) eingesetzte Stange bildet.

3. Maschine nach Patentanspruch 1 oder 2, **dadurch gekennzeichnet, dass** im Querschnitt zu einer normal zu der Längsrichtung verlaufenden Ebene die Rille (c) eine im wesentlichen in Querrichtung wie ein "V" divergierende Form aufweist, welche im wesentlichen durch die durch die "V"-Form gehende Mittellinie identifiziert ist, wobei die Druckoberfläche (15) im Querschnitt gesehen eine der Seiten der "V"-Form ist.

4. Maschine nach einem beliebigen der Patentansprüche von 1 bis 3, **dadurch gekennzeichnet, dass** die Spannmittel (14) aus selbstschneidenden Schrauben (16) in der Struktur (m) bestehen, die in der Lage sind, die Abschnitte der Stange (13) an der Struktur (m) zu spannen.

5. Maschine nach einem beliebigen der Patentansprüche von 1 bis 3, **dadurch gekennzeichnet, dass** die Spannmittel (14) aus einem Mechanismus aus Schrauben (16) und Mutterschraube (16') bestehen, in der Lage, die Abschnitte der Stange (13) an der Struktur (m) zu spannen.

6. Maschine nach einem beliebigen der Patentansprüche von 1 bis 5, **dadurch gekennzeichnet, dass** die Abschnitte der Stange (13) Bohrungen (9) aufweisen, die quer zu der längsverlaufenden Montagerichtung verlaufen und dazu bestimmt sind, die Schrauben (16) aufzunehmen, diese wiederum im wesentlichen entsprechend der durch die "V"-Form gehenden Mittellinie angeordnet, um die Abschnitte der Stange (13) an der Struktur (m) zu spannen.

## Revendications

1. Une machine à scie circulaire pour pièces (1) en bois ou matériaux similaires, de type essentiellement connu, comprenant :
- une première table (2') destinée à supporter ladite pièce (1), reposant sur le plan horizontal XY d'un triplet de directions XYZ mutuellement orthogonales, et réalisée sous forme d'un chariot (2) mobile dans une direction longitudinale X d'avancement de coupe ;
- un élément-rail (6) faisant partie intégrante du bâti (4) de ladite machine et destiné, par le biais d'éléments roulants (7) interposés entre lui et ledit chariot, à guider le chariot (2) en question dans la direction X ;
- des pistes (6p) dans ledit rail et, respectivement, (2p) dans ledit chariot, à axes rectilignes et parallèles, destinées à permettre aux éléments roulants (7) susmentionnés de rouler à l'intérieur d'elles, au moins deux des pistes (6p) du rail faisant face à au moins deux des pistes (2p) du chariot, définissant ainsi au moins deux guides (8) et (8') séparés, sous forme de canaux longitudinaux rectilignes et parallèles, pour lesdits éléments roulants (7), ces derniers étant alignés à l'intérieur des canaux en question ;
- une seconde table (3), fixe, située latéralement à et coplanaire à ladite première table (2'), et destinée à supporter ladite pièce (1) ;
- un outil de coupe rotatif (5) en forme de disque, monté sur ladite table fixe (3) et tournant dans un plan vertical XZ juste entre les bords longitudinaux opposés de la première table (2') et du chariot (2) et de la seconde table fixe (3), et destiné à découper la pièce (1), ladite machine étant **caractérisée en ce qu'**elle comprend :
- une structure (m), coïncidant soit avec ledit rail (6) soit avec ledit chariot (2), les deux s'excluant mutuellement, qui comporte une rainure longitudinale continue (c), parallèle et adjacente à une piste (p) réalisée dans ladite structure (m), la piste en question étant l'une des pistes (6p) du rail (6) ou des pistes (2p) du chariot (2) selon que la structure (m) dans laquelle est réalisée ladite rainure (c) coïncide avec ledit rail (6) ou avec ledit chariot (2) ; ladite rainure (c) étant située du côté opposé au côté servant au roulement, en se référant à la piste adjacente (p), et ladite rainure (c) ayant au moins une surface (15) sur laquelle une action de poussée cause directement un déplacement de la piste adjacente (p), en sens transversal à la direction X, en raison d'une déformation élastique d'une partie plus flexible (11) de la section (s) de la structure (m) qui supporte cette même piste (p) ;
- des éléments (12), conçus pour régler le déplacement transversal de ladite piste (p), qui peuvent être introduits dans ladite rainure (c) et serrés de façon réglable à ladite structure (m) par le biais de moyens de serrage (14), lesdits éléments (12) exerçant, quand lesdits moyens (14) sont serrés, ladite action de poussée par contact sur ladite surface (15) et causant et maintenant ledit déplacement élastique transversal conséquent de réglage de ladite piste (p) ; lesdits éléments (12) de réglage du déplacement transversal de la piste (p) étant constitués par des sections d'une barre (13), où lesdites sections de la barre (13) sont essentiellement circulaires ou elliptiques suivant une coupe effectuée avec un plan normal à la direction longitudinale et sont disposées consécutivement et sans interruptions longitudinales dans la rainure (c), et où un forçage progressif et poussée conséquente sur la surface (15) de la rainure (c) est déterminé par contact avec la surface latérale des sections de barre (13), en serrant lesdits moyens (14), en fonction de la profondeur d'approche de ces mêmes sections de barre (13) selon une direction transversale.

2. La machine selon la revendication 1, **caractérisée en ce que** lesdites sections de barre (13) consistent en une seule section de barre, formant une barre continue introduite longitudinalement dans ladite rainure (c).

3. La machine selon la revendication 1 ou 2, **caractérisée en ce que**, suivant une coupe effectuée avec un plan normal à la direction longitudinale, ladite rainure (c) présente une forme divergente essentiellement en "V", la direction transversale étant essentiellement définie par l'axe médian de la forme en "V" elle-même et ladite surface (15) de poussée étant représentée, en coupe, par l'une des branches de ladite forme en "V".

4. La machine selon l'une quelconque des revendications de 1 à 3, **caractérisée en ce que** lesdits moyens de serrage (14) sont constitués par des vis mordantes (16) dans la structure (m), à même de serrer lesdites sections de barre (13) à ladite structure (m).

5. La machine selon l'une quelconque des revendications de 1 à 3, **caractérisée en ce que** lesdits moyens de serrage (14) sont constitués par des mécanismes à vis (16) et vis mère (16'), à même de serrer lesdites sections de barre (13) à ladite structure (m).

6. La machine selon l'une quelconque des revendications de 1 à 5, **caractérisée en ce que** lesdites sections de barre (13) comportent des trous (9) qui sont transversaux à la direction longitudinale d'assemblage, destinés à être occupés par lesdites vis (16) qui sont quant à elles assemblées essentiellement selon l'axe médian de ladite forme en "V", de manière à serrer lesdites sections de barre (13) à la structure (m).
